# EUROPÄISCHE PATENTANMELDUNG

(11) **EP 4 679 044 A1**
(43) Veröffentlichungstag der Anmeldung: **14.01.2026**
(21) Anmeldenummer: 25188787.3
(22) Anmeldetag: 10.07.2025
(51) Int. Cl.: G01J 1/02, G01J 1/16, G01J 1/42, G01J 1/08, G01N 21/958

(54) **VERFAHREN ZUM KALIBRIEREN EINES OPTISCHEN SENSORS**

(30) Priorität: 12.07.2024 DE 102024119936
(71) Anmelder: Elmos Semiconductor SE, 51379 Leverkusen (DE)
(72) Erfinder: Arnold, Rüdiger, 10405 Berlin (DE); Del Valle Martinez, Antonio, 42855 Remscheid (DE)
(74) Vertreter: Wenzel Nemetzade Warthmüller Patentanwälte Part mbB

(57) **Zusammenfassung**

Verfahren zum Kalibrieren eines optischen Sensors und/oder einer Kamera für ein Kraftfahrzeug, wobei der optische Sensor und/oder die Kamera Licht der Umgebung durch eine erste Scheibe (10) für das Kraftfahrzeug erfasst, wobei das Verfahren folgende Schritte umfasst: Empfangen eines ersten Dämpfungswerts eines ersten in einer zweiten Scheibe (50) für ein Kraftfahrzeug reflektierten Referenzlichtstrahls; Empfangen eines zweiten Dämpfungswerts eines zweiten durch die zweite Scheibe (50) hindurchgetretenen Referenzlichtstrahls; Senden eines Messlichtstrahls von einer ersten Seite (12) der ersten Scheibe (10) in die erste Scheibe (10); Empfangen des in der ersten Scheibe (10) reflektierten Messlichtstrahls auf der ersten Seite (12) der ersten Scheibe (10); Bestimmen eines dritten Dämpfungswerts des Messlichtstrahls in der ersten Scheibe (10) auf Grundlage des ausgesandten Messlichtstrahls und des empfangenen Messlichtstrahls; und Kalibrieren des optischen Sensors und/oder der Kamera auf Grundlage des ersten Dämpfungswerts der zweiten Scheibe (50), des zweiten Dämpfungswerts der zweiten Scheibe (50) und des dritten Dämpfungswerts der ersten Scheibe (10).

## Beschreibung

Die Erfindung betrifft ein Verfahren zum Kalibrieren eines optischen Sensors und/oder einer Kamera für ein Kraftfahrzeug.

### Stand der Technik

Optische Sensoren, z.B. Umgebungslichtsensoren, bzw. Kameras, die hinter eine Scheibe eines Kraftfahrzeugs angeordnet sind, müssen für unterschiedliche Scheiben jeweils einzeln kalibriert werden, da die Scheiben unterschiedliche Dicken und Designs (Neigungswinkel) haben und Umgebungslicht bzw. Licht von außen durch die Scheiben unterschiedlich stark gedämpft wird. Dies ist technisch aufwendig und verursacht hohe Kosten, insbesondere da es eine Vielzahl von unterschiedlichen Scheiben gibt.

Die DE 10 2008 030 611 A1 offenbart einen optischen Sensor zur Sichtweitenmessung nach dem Laufzeitverfahren gemäß dem Stand der Technik.

### Offenbarung der Erfindung

Der Erfindung liegt die Aufgabe zu Grunde, die Kalibrierung eines optischen Sensors und/oder einer Kamera, der bzw. die Licht durch eine Scheibe eines Kraftfahrzeugs empfängt, technisch einfach durchzuführen.

Diese Aufgabe wird durch ein Verfahren zum Kalibrieren eines optischen Sensors und/oder einer Kamera gemäß Anspruch 1 gelöst.

Insbesondere wird die Aufgabe durch ein Verfahren zum Kalibrieren eines optischen Sensors und/oder einer Kamera für ein Kraftfahrzeug, wobei der optische Sensor und/oder die Kamera Licht der Umgebung durch eine erste Scheibe für das Kraftfahrzeug erfasst, gelöst, wobei das Verfahren folgende Schritte umfasst:
Empfangen eines ersten Dämpfungswerts eines ersten in einer zweiten Scheibe für ein Kraftfahrzeug reflektierten Referenzlichtstrahls;
Empfangen eines zweiten Dämpfungswerts eines zweiten durch die zweite Scheibe hindurchgetretenen Referenzlichtstrahls;
Senden eines Messlichtstrahls von einer ersten Seite der ersten Scheibe in die erste Scheibe;
Empfangen des in der ersten Scheibe reflektierten Messlichtstrahls auf der ersten Seite der ersten Scheibe;
Bestimmen eines dritten Dämpfungswerts des Messlichtstrahls in der ersten Scheibe auf Grundlage des ausgesandten Messlichtstrahls und des empfangenen Messlichtstrahls;
und Kalibrieren des optischen Sensors und/oder der Kamera auf Grundlage des ersten Dämpfungswerts der zweiten Scheibe, des zweiten Dämpfungswerts der zweiten Scheibe und des dritten Dämpfungswerts der ersten Scheibe.

Ein Vorteil hiervon ist, dass die Kalibrierung des optischen Sensors und/oder der Kamera abhängig von der Dämpfung bzw. Absorption des Lichts durch die jeweilige Scheibe technisch einfach durchgeführt werden kann. Zudem kann die Kalibrierung ohne menschliches Zutun bzw. manuelles Eingreifen durchgeführt werden. Auf diese Weise kann der optische Sensor und/oder die Kamera automatisch bzw. automatisiert kalibriert werden. Somit muss der optische Sensor bzw. die Kamera nicht für jede Bauart der Scheibe manuell kalibriert werden, sondern der Sensor kann nach dem Anordnen des Sensors an der Scheibe automatisch kalibriert werden. Zudem wird hierdurch die Zuverlässigkeit und/oder Sicherheit des optischen Sensors bzw. der optischen Kamera erhöht. Auch werden keine Attribute der Scheibe, CAD-Daten oder ähnliches zur Bestimmung der Dämpfung bzw. Absorption des Lichts durch die jeweilige Scheibe benötigt.

Die Aufgabe wird auch durch ein Kalibrierungssystem gemäß Anspruch 10 gelöst.

Insbesondere wird die Aufgabe auch durch ein Kalibrierungssystem zum Kalibrieren eines optischen Sensors und/oder einer Kamera für ein Kraftfahrzeug gelöst, wobei der optische Sensor und/oder die Kamera Licht von der Umgebung durch eine erste Scheibe für das Kraftfahrzeug erfasst, wobei das Kalibrierungssystem folgendes umfasst: eine Empfangsvorrichtung zum Empfangen eines ersten Dämpfungswerts eines ersten in einer zweiten Scheibe für ein Kraftfahrzeug reflektierten Referenzlichtstrahls und zum Empfangen eines zweiten Dämpfungswerts eines zweiten durch die zweite Scheibe hindurchgetretenen Referenzlichtstrahls, eine Sendevorrichtung zum Senden eines Messlichtstrahls von einer ersten Seite der ersten Scheibe in die erste Scheibe, eine Messvorrichtung zum Messen des in der ersten Scheibe reflektierten Messlichtstrahls auf der ersten Seite der ersten Scheibe, eine Bestimmungsvorrichtung zum Bestimmen eines dritten Dämpfungswerts des Messlichtstrahls in der ersten Scheibe auf Grundlage des ausgesandten Messlichtstrahls und des gemessenen Messlichtstrahls, und eine Kalibrierungsvorrichtung zum Kalibrieren des optischen Sensors und/oder der Kamera auf Grundlage des ersten Dämpfungswerts der zweiten Scheibe, des zweiten Dämpfungswerts der zweiten Scheibe und des dritten Dämpfungswerts der ersten Scheibe.

Vorteilhaft hieran ist, dass der optische Sensor bzw. die Kamera automatisch kalibriert werden können. Es werden insbesondere keine Daten über den Aufbau (z.B. CAD-Daten) oder ähnliches benötigt. Zudem ist kein manueller Eingriff oder ähnliches zum Kalibrieren notwendig. Das Kalibrierungssystem ist technisch einfach und kostengünstig, insbesondere da unter Umständen keine zusätzlichen Sensoren außer denen, die bei den meisten Scheiben ohnehin vorhanden sind, benötigt werden. Darüber hinaus kann die Kalibrierung schnell durchgeführt werden.

Auch eine Scheibe mit einem solchen Kalibrierungssystem wird beansprucht. Ebenso wird ein Kraftfahrzeug mit solch einer Scheibe (mit Kalibrierungssystem) beansprucht.

Gemäß einer Ausführungsform des Verfahrens wird der dritte Dämpfungswert mittels eines an der ersten Scheibe angeordneten Regensensors bestimmt. Vorteilhaft hieran ist, dass der dritte Dämpfungswert technisch einfach und ohne zusätzliche Sensoren bestimmt werden kann, da an Scheiben für Kraftfahrzeuge oftmals bzw. üblicherweise ein Regensensor angeordnet ist. Dies senkt die Kosten und den Aufwand des Verfahrens. Zudem kann der dritte Dämpfungswert auf diese Weise technisch besonders zuverlässig experimentell bestimmt werden.

Gemäß einer Ausführungsform des Verfahrens wird der dritte Dämpfungswert mittels einer Referenzstrecke in der ersten Scheibe mittels eines reflektierten Lichtstrahls, der sichtbares Licht umfasst, bestimmt. Ein Vorteil hiervon ist, dass der dritte Dämpfungswert mit (für den Menschen) sichtbarem Licht bestimmt wird. Somit kann die Bestimmung des dritten Dämpfungswerts mit Licht durchgeführt werden, das ähnlich mit bzw. identisch zu dem Licht ist, dessen zunächst unbekannter vierter Dämpfungswert in der ersten Scheibe für die Kalibrierung bestimmt werden soll.

Gemäß einer Ausführungsform des Verfahrens sich die Dicken und/oder die Farbeigenschaften der ersten Scheibe und der zweite Scheibe voneinander unterscheiden. Vorteilhaft hieran ist, dass der optische Sensor und/oder die Kamera für sehr unterschiedliche Scheiben technisch einfach kalibriert wird.

Gemäß einer Ausführungsform des Verfahrens wird der erste Dämpfungswert mittels eines an der zweiten Scheibe angeordneten Regensensors bestimmt. Ein Vorteil hiervon ist, dass der erste Dämpfungswert ohne einen zusätzlichen Sensor technisch einfach bestimmt werden kann, da an Scheiben für Kraftfahrzeuge oftmals bzw. üblicherweise ein Regensensor angeordnet ist. Zudem kann der erste Dämpfungswert präzise bestimmt werden.

Gemäß einer Ausführungsform des Verfahrens umfasst oder ist die erste Scheibe und/oder die zweite Scheibe eine Windschutzscheibe und/oder Heckscheibe für ein Kraftfahrzeug. Ein Vorteil hiervon ist, dass die Kalibrierung insbesondere für speziell ausgebildete Scheiben für ein Kraftfahrzeug technisch einfach durchgeführt werden kann, da die Windschutzscheibe bzw. die Heckscheibe oftmals z.B. Kunststofffolien und/oder Heizelemente aufweist.

Gemäß einer Ausführungsform des Verfahrens wird bei dem Schritt des Kalibrierens der dritte Dämpfungswert in Verhältnis zum ersten Dämpfungswert zum Bestimmen eines Dämpfungsverhältnisses zwischen der ersten Scheibe und der zweiten Scheibe gesetzt, wird zum Bestimmen eines vierten Dämpfungswerts der ersten Scheibe, der angibt, wie stark Licht, das die erste Scheibe durchstrahlt, gedämpft wird, der zweite Dämpfungswert mit dem Dämpfungsverhältnis multipliziert, und wird der optische Sensor und/oder die Kamera mittels des vierten Dämpfungswerts kalibriert. Hierdurch kann die Dämpfung des durch die erste Scheiben einfallenden Lichts für den optischen Sensor und/oder die Kamera technisch besonders einfach und zuverlässig bestimmt werden.

Gemäß einer Ausführungsform des Verfahrens wird der erste Dämpfungswert bestimmt, indem die Strahlungsleistung eines von einer ersten Seite der zweiten Scheibe ausgesandten Lichtstrahls in Bezug zu der Strahlungsleistung des an der zweiten Seite der zweiten Scheiben reflektierten und in einem Sensor auf der ersten Seite der zweiten Scheibe empfangenen Lichtstrahls gesetzt wird. Vorteilhaft hieran ist, dass der erste Dämpfungswert besonders zuverlässig und mit geringem Rechenaufwand bestimmt werden kann.

Gemäß einer Ausführungsform des Verfahrens wird der zweite Dämpfungswert bestimmt, indem die Strahlungsleistung von auf eine zweite Seite der zweiten Scheibe einfallendem Licht in Bezug zu der Strahlungsleistung von von einem auf der ersten Seite der zweiten Scheibe angeordneten Sensor und/oder von einer auf der ersten Seite der zweiten Scheibe angeordneten Kamera empfangenen Licht, das durch die zweite Scheibe hindurchgetreten ist, gesetzt wird. Ein Vorteil hiervon ist, dass der zweite Dämpfungswert mit geringem Rechenaufwand berechnet werden kann. Zudem ist diese Bestimmung des zweiten Dämpfungswerts besonders präzise.

Unter einem Dämpfungswert bzw. Dämpfung kann insbesondere die Absorption des Lichts bzw. Lichtstrahls durch die jeweilige Scheibe sein. Die Absorption kann insbesondere von den jeweiligen Eigenschaften der Scheibe, z.B. Dicke, Design, Neigungswinkel, Farbe bzw. Tönung, Materialzusammensetzung, Oberflächenbehandlung, weiteren Elementen (z.B. Kunststofffolien und/oder Heizelementen) an oder in der Scheibe etc., abhängen.

Der optische Sensor und/oder die Kamera kann für den Menschen sichtbares Licht und/oder für den Menschen unsichtbares Licht (z.B. Infrarot und/oder Ultraviolett) erfassen.

Das Kalibrieren kann mittels Software bzw. mittels eines Computers durchgeführt werden. Das Kalibrierungssystem kann Software bzw. einen Computer zum Kalibrieren des optischen Sensors und/oder der Kamera aufweisen.

Die Empfangsvorrichtung kann ein Teil eines Computers sein. Die Dämpfungswerte können z.B. von einem Speicher (beispielsweise eine Festplatte, ein SSD oder ähnliches) empfangen werden.

Durch das Kalibrieren kann insbesondere der optische Sensor und/oder die Kamera bzw. deren Messsignale ins Verhältnis zu dem tatsächlichen Licht auf der anderen Seite der Scheibe (die beim Kraftfahrzeug die äußere Seite der Scheibe ist) gesetzt werden. Sozusagen kann bestimmt werden, welcher Teil bzw. Anteil des Lichts, das vor bzw. bei dem Eintreten in die Scheibe vorhanden ist, bei dem optischen Sensor bzw. in der Kamera ankommt. Es kann somit bestimmt werden, welcher Teil bzw. Anteil des Lichts, der von dem optischen Sensor bzw. der Kamera ohne das Vorhandensein der Scheibe empfangen würde, beim Vorhandensein der jeweiligen Scheibe empfangen wird.

Das Kraftfahrzeug kann beispielsweise ein PKW, ein LKW, ein Bus, ein Motorrad, ein Flugzeug, ein Hubschrauber, ein Roller, ein Gabelstapler, ein Schienenfahrzeug bzw. Bahnfahrzeug, ein Bagger oder ähnliches sein.

Der optische Sensor kann einen Sensor für für den Menschen sichtbares Licht umfassen oder sein. Denkbar ist auch, dass der optische Sensor für den Menschen nicht sichtbares Licht empfangen bzw. messen kann. Auch eine Kombination von sichtbarem Licht und nicht sichtbarem Licht ist denkbar. Der optische Sensor kann Teil eines Lidar- oder Ladar-Systems sein. Insbesondere kann das Lidar-System oder Ladar-System ein aktiver optischer Sensor sein. Der optische Sensor kann ein aktiver optischer Sensor sein.

Die Kamera kann eine Kamera für für den Menschen sichtbares Licht umfassen oder sein. Die Kamera kann eine Kamera zur Beobachtung der Umgebung, z.B. zur Erfassung von Straßenschildern, umfassen oder sein. Vorstellbar ist, dass die Kamera für den Menschen nicht-sichtbares Licht (z.B. Infrarotlicht) erfasst. Denkbar ist auch, dass die Kamera eine TOF-Kamera umfasst oder ist.

Bevorzugte Ausführungsformen ergeben sich aus den Unteransprüchen. Nachfolgend wird die Erfindung anhand von Zeichnungen von Ausführungsbeispielen näher erläutert. Hierbei zeigen
- Fig. 1: eine schematische Ansicht einer zweiten Scheibe für ein Kraftfahrzeug; und
- Fig. 2: eine schematische Ansicht einer ersten Scheibe für ein Kraftfahrzeug.

Bei der nachfolgenden Beschreibung werden für gleiche und gleich wirkende Teile dieselben Bezugsziffern verwendet.

Die Dämpfung bzw. Absorption bzw. der dritte Dämpfungswert einer ersten Scheibe 10 für ein Kraftfahrzeug soll bestimmt werden.

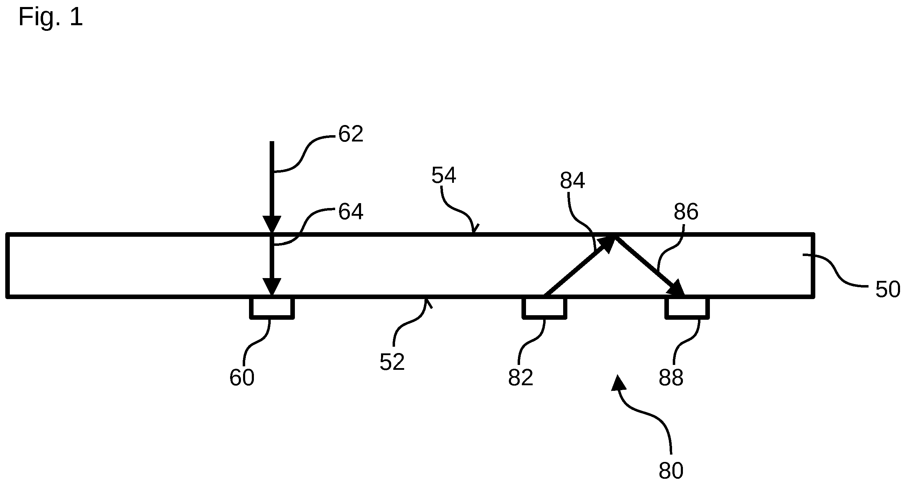

Fig. 1 zeigt eine schematische Ansicht einer zweiten Scheibe 50 für ein Kraftfahrzeug.

Die Scheibe 10, 50 ist in der jeweiligen Zeichnung nur ausschnittsweise bzw. abschnittsweise gezeigt. Typischerweise ist die (erste und/oder zweite) Scheibe 10, 50 gebogen, was jedoch in den Zeichnungen nicht dargestellt ist.

Die erste Scheibe 10 und/oder die zweite Scheibe 50 kann beispielsweise eine Windschutzscheibe bzw. Frontscheibe für ein Kraftfahrzeug bzw. eines Kraftfahrzeugs sein. Denkbar ist auch, dass die erste Scheibe 10 und/oder die zweite Scheibe 50 eine Heckscheibe für ein Kraftfahrzeug bzw. eines Kraftfahrzeugs ist.

Die zweite Scheibe 50 kann auch als Referenzscheibe bezeichnet werden, da mittels dieser Scheibe 50 der erste Dämpfungswert und der zweite Dämpfungswert bestimmt werden und anschließend ein optischer Sensor bzw. eine Kamera einer anderen Scheibe (erste Scheibe 10) hiermit kalibriert wird.

Die zweite Scheibe 50 weist eine erste Seite 52 (in Fig. 1 untere Seite) und eine der ersten Seite 52 gegenüberliegende zweite Seite 54 (in Fig. 1 obere Seite) auf.

Auf der ersten Seite 52 der zweiten Scheibe 50 ist ein Regensensor 80 angeordnet. Der Regensensor 80 kann unmittelbar bzw. direkt auf der ersten Seite 52 der zweiten Scheibe 50 angeordnet sein. Der Regensensor 80 umfasst eine Lichtausstrahlvorrichtung, z.B. eine LED 82, und einen Lichtempfänger (z.B. Photodiode 88) auf. Die Lichtausstrahlvorrichtung sendet einen Lichtstrahl 84 in die zweite Scheibe 50 in einem Winkel in Richtung der zweiten Seite 54 der zweiten Scheibe 50. An der zweiten Seite 54 der zweiten Scheibe 50 wird (sofern keine Flüssigkeit auf der zweiten Seite 54 der zweiten Scheibe 50 an dieser Stelle vorhanden ist) der Lichtstrahl im Wesentlichen total reflektiert. Der reflektierte Lichtstrahl 86 wird von einem Lichtempfänger bzw. Lichtsensor erfasst.

Das Licht des Regensensors 80 kann Infrarotlicht umfassen oder sein. Möglich ist, dass das ausgesandte und empfangene Licht des Regensensors 80 gepulstes Licht umfasst oder ist. Denkbar ist auch, dass das Licht des Regensensors 80 sichtbares Licht umfasst oder ist.

Die Dämpfung bzw. Absorption des Lichtstrahls des Regensensors 80 kann erfasst bzw. bestimmt werden. Auf Grundlage der Strahlungsleistung des ausgesandten Lichtstrahls der Lichtausstrahlvorrichtung des Regensensors 80 und der Strahlungsleistung des empfangenen reflektierten Lichtstrahls in dem Lichtempfänger kann die Dämpfung bzw. Absorption bzw. der erste Dämpfungswert der zweiten Scheibe 50 bestimmt bzw. berechnet werden. Beispielsweise kann festgestellt werden, dass nur ca. 90% der Strahlungsleistung bzw. des ausgesandten Lichtstrahls im Lichtempfänger empfangen wird. Somit beträgt die Dämpfung bzw. Absorption der zweiten Scheibe 10%. Dies ist der erste Dämpfungswert. Anstelle oder zusätzlich zur Strahlungsleistung kann auch die Strahlungsintensität verwendet werden, um den ersten Dämpfungswert zu bestimmen.

Ein optischer Sensor (z.B. Umgebungslichtsensor 60) bzw. eine Kamera ist auf der ersten Seite 52 der zweiten Scheibe 50 angeordnet (in Fig. 1 links dargestellt). Der Sensor bzw. die Kamera kann unmittelbar bzw. direkt auf der ersten Seite 52 der zweiten Scheibe 50 angeordnet sein. Licht von der Umgebung bzw. von der zweiten Seite 54 der zweiten Scheibe 50 strahlt durch die zweite Scheibe 50 hindurch und gelangt zu dem optischen Sensor bzw. zu der Kamera. Das Licht, das von der zweiten Seite 54 aus in die zweite Scheibe 50 eintritt, wird durch die zweite Scheibe 50 gedämpft bzw. teilweise absorbiert. Dies bedeutet, dass (auch bei senkrecht einfallendem) Licht bzw. Umgebungslicht 62 auf die zweite Seite 54 der zweite Scheibe 50 nicht das gesamte Licht zu dem optischen Sensor bzw. zu der Kamera auf der der ersten Seite 52 der zweiten Scheibe 50 gelangt. Durch einen Referenzlichtstrahl (mit einer vorgegebenen Strahlungsleistung bzw. Stärke oder Strahlungsintensität) von der zweiten Seite 54 der zweiten Scheibe 50 aus durch die zweite Scheibe 50 auf den optischen Sensor bzw. in die Kamera kann die Dämpfung durch die zweite Scheibe 50 beim Durchtreten des Lichts bzw. des Lichtstrahls 64 durch die zweite Scheibe 50 bestimmt werden. Diese Dämpfung bzw. diese Absorption in der zweiten Scheibe 50 ist der zweite Dämpfungswert.

Das Licht des Referenzstrahls für den optischen Sensor bzw. die Kamera kann sichtbares Licht umfassen oder sein. Denkbar ist, dass das Licht des Referenzstrahls für den optischen Sensor bzw. die Kamera nicht-sichtbares Licht (z.B. Infrarot und/oder Ultraviolett) umfasst.

Der erste Dämpfungswert und der zweite Dämpfungswert für die getestete bzw. untersuchte zweite Scheibe 50 (Referenzscheibe) kann gespeichert werden und/oder gesendet werden.

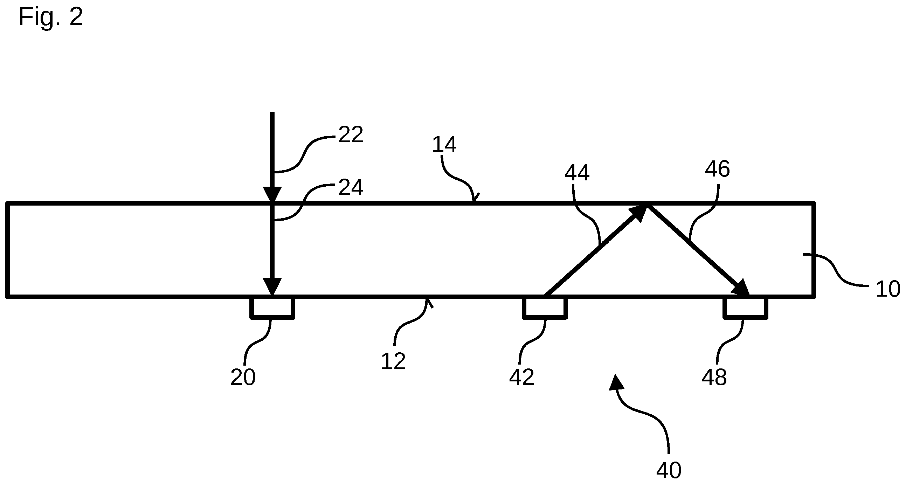

Fig. 2 zeigt eine schematische Ansicht einer ersten Scheibe 10 für ein Kraftfahrzeug.

Die erste Scheibe 10 kann sich von der zweiten Scheibe 50 in ihren Eigenschaften unterscheiden. Theoretisch ist es natürlich denkbar, dass die zweite Scheibe 50 vollständig baugleich zu der ersten Scheibe 10.

Die erste Scheibe 10 der Fig. 2 ist dicker als die zweite Scheibe 50 in Fig. 1. Dies ist nur ein beispielhaft dargestellter Unterschied zwischen den Eigenschaften der ersten Scheibe 10 und der zweiten Scheibe 50. Denkbar ist auch, dass die erste Scheibe 10 der Fig. 2 dünner als die zweite Scheibe 50 in Fig. 1 ist. Die Dämpfung bzw. Absorption für einen Lichtstrahl, der durch die erste Scheibe 10 hindurchstrahlt, ist zunächst unbekannt.

Die erste Scheibe 10 weist eine erste Seite 12 (in Fig. 1 untere Seite) und eine der ersten Seite 12 gegenüberliegende zweite Seite 14 (in Fig. 1 obere Seite) auf. Die zweite Seite 14 befindet sich nach dem Einbau der ersten Scheibe 10 in ein Kraftfahrzeug auf der Außenseite des Kraftfahrzeugs. Die erste Seite 12 der ersten Scheibe 10 ist nach dem Einbau in ein Kraftfahrzeug dem Innenraum des Kraftfahrzeugs zugewandt.

Ein Regensensor 40 ist an der ersten Seite 12 der ersten Scheibe 10 angeordnet. Der Regensensor 40 der ersten Scheibe 10 kann baugleich zum Regensensor 80 der zweiten Scheibe 50 sein. Der Regensensor 40 umfasst z.B. eine LED 42, die einen Lichtstrahl 44 aussendet. Der Regensensor 40 der ersten Scheibe 10 misst somit ebenfalls einen an der zweiten Seite 14 der ersten Scheibe 10 reflektierten Lichtstrahl 46. Hierdurch kann die Absorption bzw. die Dämpfung der zweiten Scheibe 50 und somit der dritte Dämpfungswert bestimmt werden. Etwaige unterschiedliche Größen der Sensorflächen des Regensensors 80 der zweiten Scheibe 50 und des Regensensors 40 der ersten Scheibe 10 können bei der Kalibrierung bzw. bei der Bestimmung der jeweiligen Dämpfungswerte berücksichtigt werden.

Ein optischer Sensor und/oder eine Kamera ist auf der ersten Seite 12 der ersten Scheibe 10 angeordnet. Der optische Sensor kann z.B. ein Umgebungslichtsensor 20 zum Erfassen von Umgebungslicht 22 umfassen oder sein. Der optische Sensor und/oder die Kamera empfängt Licht von der zweiten Seite 14 der ersten Scheibe 10, das durch die erste Scheibe 10 hindurchtritt. Beim Durchstrahlen der ersten Scheibe 10 wird das Licht 24 durch die erste Scheibe 10 gedämpft bzw. teilweise absorbiert. Diese Absorption des Lichts bzw. Lichtstrahls 24 durch die erste Scheibe 10 kann unterschiedlich zu der Absorption der zweiten Scheibe 50 sein.

Der optische Sensor kann ein aktiver optischer Sensor sein. Dies kann insbesondere bedeuten, dass das Licht, das von dem aktiven optischen Sensor empfangen wird und durch die erste Scheibe 10 hindurchgetreten ist, Licht ist oder Licht umfasst, das zunächst von dem aktiven optischen Sensor (durch die erste Scheibe 10 hindurch) ausgesandt bzw. gestrahlt wurde und anschließend von Objekten in der Umgebung (d.h. von Objekten, die sich von dem Sensor aus gesehen auf der anderen Seite der ersten Scheibe 10 befinden, wobei die Objekte beabstandet zu der ersten Scheibe 10 sein können) reflektiert wurde. Gleiches kann entsprechend für den optischen Sensor bei der zweiten Scheibe 50 gelten.

Dies kann insbesondere durch unterschiedliche Dicken der beiden Scheiben 10, 50, unterschiedliche Materialien der Scheiben 10, 50, unterschiedliche Tönungen der Scheiben 10, 50, unterschiedlichen weiteren Elementen auf oder in den Scheiben 10, 50 etc. verursacht werden.

Es wird ein dritter Dämpfungswert bestimmt, indem die Strahlungsleistung bzw. Stärke des von der Lichtausstrahlvorrichtung des Regensensors 40 ausgesandten Lichtstrahls bzw. Lichts in Bezug zu der Strahlungsleistung bzw. Stärke des von dem Lichtempfänger (z.B. Photodiode 44) bzw.

Messvorrichtung des Regensensors 40 empfangenen bzw. gemessenen Lichtstrahls bzw. Lichts gesetzt wird. Beispielsweise kann ein Verhältnis zwischen der in die erste Scheibe 10 ausgesandten Strahlungsleistung bzw. Stärke und der in dem Lichtempfänger bzw. Messvorrichtung empfangenen Strahlungsleistung bzw. Stärke gebildet werden. So kann z.B. festgestellt werden, dass nur ca. 90% der ausgesandten Strahlungsleistung im Regensensor 40 vom Lichtempfänger bzw. von der Messvorrichtung empfangen wird (bei trockener zweite Seite 14 der ersten Scheibe 10 in diesem Bereich). Dies bedeutet, dass der dritte Dämpfungswert der ersten Scheibe 10 somit 10% (100% minus der empfangenen 90% Lichtstärke) beträgt. Somit werden in diesem Beispiel 10% des Lichts des Regensensors 40 durch die erste Scheibe 10 absorbiert bzw. das Licht entsprechend gedämpft. Anstelle oder zusätzlich zur Strahlungsleistung kann auch die Strahlungsintensität verwendet werden, um den dritten Dämpfungswert zu bestimmen.

Auf Grundlage des ersten Dämpfungswerts und des zweiten Dämpfungswerts der zweiten Scheibe 50 sowie des dritten Dämpfungswerts der ersten Scheibe 10 kann der vierte Dämpfungswert bzw. die Dämpfung des Lichts durch die erste Scheibe 10 zu dem optischen Sensor bzw. zu der Kamera bestimmt werden. Dies kann beispielweise dadurch bestimmt werden, dass der dritte Dämpfungswert in Verhältnis zu dem ersten Dämpfungswert gesetzt wird. Wenn somit beispielsweise der dritte Dämpfungswert geteilt durch den ersten Dämpfungswert den Wert 1,2 beträgt, bedeutet dies, dass die erste Scheibe 10 einen um 20% größeren Dämpfungswert aufweist als die zweite Scheibe 50. Somit wird angenommen bzw. bestimmt, dass der vierte Dämpfungswert (Dämpfung von Licht beim Durchtritt durch die erste Scheibe 10 zu dem optischen Sensor bzw. zu der Kamera) ebenfalls 20% größer als der zweite Dämpfungswert ist. Entsprechend dieses vierten Dämpfungswerts kann der optische Sensor bzw. die Kamera kalibriert werden. So können beispielsweise die Messwerte bzw. Signalwerte des optischen Sensors bzw. der Kamera der ersten Scheibe 10 bei einer 20% größeren Dämpfung durch die erste Scheibe 10 (im Vergleich zu der zweiten Scheibe 50) entsprechend verstärkt werden (z.B. Teilung der Messwerte bzw. Signalwerte durch 0,8). Dann entsprechen die Messwerte bzw. Signalwerte des optischen Sensors bzw. der Kamera der ersten Scheibe 10 im Wesentlichen den Messwerten bzw. Signalwerten des optischen Sensors bzw. der Kamera der zweiten Scheibe 50 (bei gleichem Lichteinfall auf jeweilige Scheibe 10, 50).

Der Ablauf des Verfahrens ist somit, dass der erste Dämpfungswert und der zweite Dämpfungswert empfangen werden (z.B. per Funk, per Internet, aus einem Speicher abgerufen werden). Der dritte Dämpfungswert wird an der ersten Scheibe 10 bestimmt. Nun kann der vierte Dämpfungswert, d.h. die Absorption bzw. Dämpfung für einen durch die erste Scheibe 10 durchgehenden Strahl, bestimmt bzw. berechnet werden und der optische Sensor bzw. die Kamera auf die bestimmte bzw. berechnete Absorption der ersten Scheibe 10 eingestellt bzw. kalibriert werden. Der optische Sensor kann beispielsweise ein Umgebungslichtsensor 20 umfassen oder sein.

Der Speicher kann z.B. Teil einer Auswertevorrichtung (z.B. eines Computers oder eines ICs) des optischen Sensors 20 sein.

Bei der Bestimmung des vierten Dämpfungswert kann berücksichtigt werden, dass der Weg des reflektierten Strahls bei einer dickeren Scheiben stärker (nämlich ungefähr um den Faktor 2) zunimmt als der Weg des durch die Scheibe hindurchtretenden Strahls bei einer dickeren Scheibe. Der Weg des hindurchtretenden Lichtstrahls nimmt bei einer 10% dickeren Scheibe um 10% zu, während der Weg des reflektierten Lichtstrahls bei einer 10% dickeren Scheibe um ca. 20% zunimmt.

Durch die Berücksichtigung des dritten (bei der ersten Scheibe 10 tatsächlich gemessenen) Dämpfungswerts können auch unterschiedliche Farben bzw. Tönungen oder ähnliches bei der Kalibrierung berücksichtigt werden. Üblicherweise ist der Bereich der jeweiligen Scheibe, in dem der Regensensor 40 und der optische Sensor bzw. die Kamera angeordnet sein, nicht getönt bzw. eingefärbt.

Üblicherweise befindet sich der Sensor bzw. die optische Kamera nicht weit entfernt von dem Regensensor, so dass die Annahme, dass der Bereich, durch den der Lichtstrahl des Regensensors in der Scheibe 10, 50 verläuft, und der Bereich, durch den das Licht auf dem Weg zu dem optischen Sensor bzw. zu der Kamera durch die Scheibe 10, 50 hindurchtritt, im Wesentlichen dieselben Eigenschaften, insbesondere im Wesentlichen identische Dämpfungswerte bzw. Absorptionswert aufweist, zutreffend ist. Unterschiede hierbei können natürlich bei der Kalibrierung berücksichtigt werden.

Es ist denkbar, dass anstelle oder zusätzlich zu dem Regensensor 40, 80 bei der ersten Scheibe 10 und/oder bei der zweiten Scheibe 50 eine Referenzstrecke zum Bestimmen des ersten Dämpfungswerts der zweiten Scheibe 50 und/oder des dritten Dämpfungswerts der ersten Scheibe 10 verwendet wird. Die Referenzstrecke kann eine Lichtausstrahlvorrichtung auf der ersten Seite 52 der zweiten Scheibe 50 und einen Lichtempfänger auf der ersten Seite 52 der zweiten Scheibe 50 zum Empfangen des an der zweiten Seite 54 der zweiten Scheibe 50 reflektierten Lichtstrahls aufweisen. Auch bei der ersten Scheibe 10 kann eine entsprechend aufgebaute Referenzstrecke vorhanden sein. Die Referenzstrecke kann sichtbares Licht verwenden. Die Farbe des Lichts kann z.B. Rot, Grün, Blau und/oder Gelb umfassen oder sein.

### Bezugszeichenliste:

- 10: erste Scheibe
- 12: erste Seite der ersten Scheibe
- 14: zweite Seite der ersten Scheibe
- 20: Umgebungslichtsensor der ersten Scheibe
- 22: Umgebungslicht außerhalb der ersten Scheibe
- 24: in die erste Scheibe eingetretenes Licht
- 40: Regensensor der ersten Scheibe
- 42: LED der ersten Scheibe
- 44: von der LED ausgesandtes Licht in der ersten Scheibe
- 46: reflektiertes Licht in der ersten Scheibe
- 48: Photodiode der ersten Scheibe
- 50: zweite Scheibe
- 52: erste Seite der zweiten Scheibe
- 54: zweite Seite der zweiten Scheibe
- 60: Umgebungslichtsensor der zweiten Scheibe
- 62: Umgebungslicht außerhalb der zweiten Scheibe
- 64: in die zweite Scheibe eingetretenes Licht
- 80: Regensensor der zweiten Scheibe
- 82: LED der zweiten Scheibe
- 84: von der LED ausgesandtes Licht in der zweiten Scheibe
- 86: reflektiertes Licht in der zweiten Scheibe
- 88: Photodiode der zweiten Scheibe

## Patentansprüche

1. Verfahren zum Kalibrieren eines optischen Sensors und/oder einer Kamera für ein Kraftfahrzeug, wobei der optische Sensor und/oder die Kamera Licht der Umgebung durch eine erste Scheibe (10) für das Kraftfahrzeug erfasst, wobei das Verfahren folgende Schritte umfasst:
Empfangen eines ersten Dämpfungswerts eines ersten in einer zweiten Scheibe (50) für ein Kraftfahrzeug reflektierten Referenzlichtstrahls;
Empfangen eines zweiten Dämpfungswerts eines zweiten durch die zweite Scheibe (50) hindurchgetretenen Referenzlichtstrahls;
Senden eines Messlichtstrahls (44) von einer ersten Seite (12) der ersten Scheibe (10) in die erste Scheibe (10);
Empfangen des in der ersten Scheibe (10) reflektierten Messlichtstrahls (46) auf der ersten Seite (12) der ersten Scheibe (10);
Bestimmen eines dritten Dämpfungswerts des Messlichtstrahls in der ersten Scheibe (10) auf Grundlage des ausgesandten Messlichtstrahls und des empfangenen Messlichtstrahls; und
Kalibrieren des optischen Sensors und/oder der Kamera auf Grundlage des ersten Dämpfungswerts der zweiten Scheibe (50), des zweiten Dämpfungswerts der zweiten Scheibe (50) und des dritten Dämpfungswerts der ersten Scheibe (10).

2. Verfahren nach Anspruch 1, wobei
der dritte Dämpfungswert mittels eines an der ersten Scheibe (10) angeordneten Regensensors (40) bestimmt wird.

3. Verfahren nach Anspruch 1 oder 2, wobei
der dritte Dämpfungswert mittels einer Referenzstrecke in der ersten Scheibe (10) mittels eines reflektierten Lichtstrahls, der sichtbares Licht umfasst, bestimmt wird.

4. Verfahren nach einem der vorhergehenden Ansprüche, wobei
sich die Dicken und/oder die Farbeigenschaften der ersten Scheibe (10) und der zweite Scheibe (50) voneinander unterscheiden.

5. Verfahren nach einem der vorhergehenden Ansprüche, wobei
der erste Dämpfungswert mittels eines an der zweiten Scheibe (50) angeordneten Regensensors (80) bestimmt wird.

6. Verfahren nach einem der vorhergehenden Ansprüche, wobei die erste Scheibe (10) und/oder die zweite Scheibe (50) eine Windschutzscheibe und/oder Heckscheibe für ein Kraftfahrzeug umfasst oder ist.

7. Verfahren nach einem der vorhergehenden Ansprüche, wobei bei dem Schritt des Kalibrierens
der dritte Dämpfungswert in Verhältnis zum ersten Dämpfungswert zum Bestimmen eines Dämpfungsverhältnisses zwischen der ersten Scheibe (10) und der zweiten Scheibe (50) gesetzt wird,
zum Bestimmen eines vierten Dämpfungswerts der ersten Scheibe (10), der angibt, wie stark Licht, das die erste Scheibe (10) durchstrahlt, gedämpft wird, der zweite Dämpfungswert mit dem Dämpfungsverhältnis multipliziert wird,
und
der optische Sensor und/oder die Kamera mittels des vierten Dämpfungswerts kalibriert wird.

8. Verfahren nach einem der vorhergehenden Ansprüche, wobei der erste Dämpfungswert bestimmt wird, indem die Strahlungsleistung eines von einer ersten Seite (52) der zweiten Scheibe (50) ausgesandten Lichtstrahls in Bezug zu der Strahlungsleistung des an der zweiten Seite (54) der zweiten Scheiben (50) reflektierten und in einem Sensor auf der ersten Seite (52) der zweiten Scheibe (50) empfangenen Lichtstrahls gesetzt wird.

9. Verfahren nach einem der vorhergehenden Ansprüche, wobei der zweite Dämpfungswert bestimmt wird, indem die Strahlungsleistung von auf eine zweite Seite (54) der zweiten Scheibe (50) einfallendem Licht in Bezug zu der Strahlungsleistung von von einem auf der ersten Seite (52) der zweiten Scheibe (50) angeordneten Sensor und/oder von einer auf der ersten Seite (52) der zweiten Scheibe (50) angeordneten Kamera empfangenen Licht, das durch die zweite Scheibe (50) hindurchgetreten ist, gesetzt wird.

10. Kalibrierungssystem zum Kalibrieren eines optischen Sensors und/oder einer Kamera für ein Kraftfahrzeug, wobei der optische Sensor und/oder die Kamera Licht von der Umgebung durch eine erste Scheibe (10) für das Kraftfahrzeug erfasst, wobei das Kalibrierungssystem folgendes umfasst:
eine Empfangsvorrichtung zum Empfangen eines ersten Dämpfungswerts eines ersten in einer zweiten Scheibe (50) für ein Kraftfahrzeug reflektierten Referenzlichtstrahls (86) und zum Empfangen eines zweiten Dämpfungswerts eines zweiten durch die zweite Scheibe (50) hindurchgetretenen Referenzlichtstrahls (64),
eine Sendevorrichtung zum Senden eines Messlichtstrahls (44) von einer ersten Seite (12) der ersten Scheibe (10) in die erste Scheibe (10),
eine Messvorrichtung zum Messen des in der ersten Scheibe (10) reflektierten Messlichtstrahls (46) auf der ersten Seite (12) der ersten Scheibe (10),
eine Bestimmungsvorrichtung zum Bestimmen eines dritten Dämpfungswerts des Messlichtstrahls in der ersten Scheibe (10) auf Grundlage des ausgesandten Messlichtstrahls (44) und des gemessenen Messlichtstrahls (46),
und
eine Kalibrierungsvorrichtung zum Kalibrieren des optischen Sensors und/oder der Kamera auf Grundlage des ersten Dämpfungswerts der zweiten Scheibe (50), des zweiten Dämpfungswerts der zweiten Scheibe (50) und des dritten Dämpfungswerts der ersten Scheibe (10).

11. Scheibe für ein Kraftfahrzeug mit einem Kalibrierungssystem nach Anspruch 10.

12. Kraftfahrzeug mit einer Scheibe nach Anspruch 11.
